# EUROPEAN PATENT SPECIFICATION

(11) **EP 2 785 085 B1**
(45) Date of publication and mention of the grant of the patent: **06.12.2017**
(21) Application number: 13305408.0
(22) Date of filing: 29.03.2013
(51) Int. Cl.: H04W 8/20, H04W 8/26

(54) **A system and method for providing incoming call to a remote device sharing a MSISDN with other remote devices**
System und Verfahren zur Bereitstellung eines eingehenden Anrufs an eine Fernvorrichtung, die sich eine MSISDN mit anderen Fernvorrichtungen teilt
Système et procédé de fourniture d'appel entrant à un dispositif distant partageant un MSISDN avec d'autres dispositifs distants

(43) Date of publication of application: 01.10.2014
(73) Proprietor: ALCATEL LUCENT, 92100 Boulogne-Billancourt (FR)
(72) Inventor: Thibault de Chanvalon, Bernard, 44708 Orvault (FR); Boudou, Xavier, 44708 Orvault (FR); El-Abed, Haithem, 91620 Nozay (FR); Fouquier, Pascal, 91620 Nozay (FR)
(74) Representative: Berthier, Karine

(56) References cited:
- WO-A1-2008/076031
- WO-A1-2011/100497
- DE-A1-102008 037 725
- US-A1- 2004 047 332

## Description

### Field of the invention

The invention relates to communication networks such as cellular communication networks.

More particularly, the invention relates to a method and system for providing an incoming call through a cellular network to a remote device sharing a Mobile Station International Subscriber Directory Number (MSISDN) with other remote devices.

In particular, the invention may concern the field of machine to machine communication.

### Background

Machine-to-Machine communication, also called M2M communication, typically involves the connection of a group of remote devices to a network, such as a cellular network, to enable remote measurement or remote reporting of information.

Such a remote device comprises one or more sensors, meters or other devices to gather information associated with a communication unit to relay information through the network. In order to connect with the cellular network, such a communication unit comprises a Subscriber Identity Module (SIM) storing an International Mobile Subscriber Identity (IMSI). The network is provided with a Home Location Register (HLR) which associate a phone number, also called, Mobile Station International Subscriber Directory Number (MSISDN) with the International Mobile Subscriber Identity (IMSI).

Charges for communication services provided by the service provider usually increase with the number of Mobile Station International Subscriber Directory Numbers (MSISDNs) and with the number of International Mobile Subscriber Identities (IMSI_{S}) which are allocated. Furthermore, the number of remote devices in machine to machine implementations may be huge. For example, it is foreseen that some applications could have to manage several millions of machine to machine remote devices (e.g. Smart Metering). Therefore, in order to reduce service charges, remote devices for M2M communication usually share a Mobile Station International Subscriber Directory Number (MSISDN) and may also share an International Mobile Subscriber Identity (IMSI).

However, since the remote devices share a unique MSISDN, communication can only be initiated by the remote devices and incoming calls towards the remote devices are not possible.

US 2004047332 discloses a process and a system for sharing a subscription between a plurality of radiotelephony terminals. The same MSISDN and the same IMSI identity are allocated to the plurality of terminals so that a single subscription is shared between the different terminals. Each terminal is connected to the central radiotelephony network during time slots that are allocated to it. Terminals may initiate a call or receive an incoming call only during the allocated time slots.

### Summary

Various embodiments provide a method and a system for providing an incoming call, through a cellular network, to a remote device sharing a Mobile Station International Subscriber Directory Number (MSISDN) with other remote devices.

In a first embodiment, a method for providing an incoming call, through a cellular network, to a remote device sharing a first Mobile Station International Subscriber Directory Number (MSISDN) with other remote devices and having a Subscriber Identity Module (SIM) storing a primary International Mobile Subscriber Identity (IMSI) corresponding to the first Mobile Station International Subscriber Directory Number (MSISDN) is provided. The method comprises:
- receiving a call from the remote device, the call being based on the primary International Mobile Subscriber Identity (IMSI) of the remote device;
- establishing a communication channel with the remote device in response to receiving the call based on the primary International Mobile Subscriber Identity (IMSI);
- transmitting, through the established communication channel, to the Subscriber Identity Module (SIM) of the remote device a secondary International Mobile Subscriber Identity (IMSI) corresponding to a second Mobile Station International Subscriber Directory Number (MSISDN) with an associated configuration instruction defining a time slot to cause the remote device to activate the secondary International Mobile Subscriber Identity (IMSI) during the associated time slot in order to allow incoming call based on the second Mobile Station International Subscriber Directory Number (MSISDN) towards the remote device during the associated time slot.

Thus, thanks to the second IMSI which is temporary stored in the SIM card of the remote device and which corresponds to a second MSISDN, an incoming call based on the second MSISDN can be initiated towards the remote device.

Such an incoming call towards the remote device may advantageously be exploited for the purpose of maintenance operation.

Moreover, since the second MSISDN is temporary allocated to the remote device, it can be later assigned to other remote devices.

According to embodiments, such method comprises one or more of the features below:
- the method comprises initiating an incoming call based on the second Mobile Station International Subscriber Directory Number (MSISDN) towards the remote device during the associated time slot.
- the method comprises receiving and storing identification data identifying the remote device for which an incoming call has to be provided.
- the method comprises receiving from the remote device a request for an incoming call upon establishing the communication channel with the remote device.
- the method comprises receiving and storing identification data identifying a remote device for which an incoming call is requested prior to receiving the call from the remote device, detecting a communication channel established with the remote device based on the identification data and automatically transmitting to the Subscriber Identity Module (SIM) of the remote device, the secondary International Mobile Subscriber Identity (IMSI) through the established communication channel in response to the detection of a communication channel.

In a second embodiment, a system for providing an incoming call, through a cellular network, to a remote device sharing a first Mobile Station International Subscriber Directory Number (MSISDN) with other remote devices and having a Subscriber Identity Module (SIM) storing a primary International Mobile Subscriber Identity (IMSI) corresponding to the first Mobile Station International Subscriber Directory Number (MSISDN) is provided. The system comprises a processor and a memory and being configured to:
- receive a call from the remote device, the call being based on the primary International Mobile Subscriber Identity (IMSI) of the remote device;
- establish a communication channel with the remote device upon the remote device initiating a call based on the primary International Mobile Subscriber Identity (IMSI); and
- transmit, through the established communication channel, to the Subscriber Identity Module (SIM) of the remote device a secondary International Mobile Subscriber Identity (IMSI) corresponding to a second Mobile Station International Subscriber Directory Number (MSISDN) with an associated configuration instruction defining a time slot to cause the remote device to activate the secondary International Mobile Subscriber Identity (IMSI) during the associated time slot in order to allow incoming call based on the second Mobile Station International Subscriber Directory Number (MSISDN) towards the remote device during the associated time slot.

In some embodiments, the system comprises one or more of the features below:
- the processor is configured to initiate an incoming call based on the second Mobile Station International Subscriber Directory Number (MSISDN) towards the remote device during the associated time slot.
- the processor is configured to receive and store identification data identifying a remote device for which incoming call has to be provided.
- the processor is configured to detect a communication channel established with the remote device for which incoming call has to be provided based on the identification data and to automatically transmit to the Subscriber Identity Module (SIM) of the remote device the secondary International Mobile Subscriber Identity (IMSI) through the established communication channel in response to communication channel detection.
- the system comprises a Home Location Register (HLR) configured to associate the shared primary Mobile Station International Subscriber Directory Number (MSISDN) with the primary International Mobile Subscriber Identity (IMSI) of the remote device.
- the remote devices sharing the same primary Mobile Station International Subscriber Directory Number (MSISDN) have different primary International Mobile Subscriber Identities (IMSIs), the Home Location Register being configured to associate a primary Mobile Station International Subscriber Directory Number (MSISDN) with the different primary International Mobile Subscriber Identities (IMSIs).
- the remote devices sharing the same primary Mobile Station International Subscriber Directory Number (MSISDN) share a same primary International Mobile Subscriber Identity (IMSI), and wherein the system is configured to identify each of the remote devices based on a predefined period of time allocated to each remote device to initiate a call based on the primary International Mobile Subscriber Identity (IMSI).
- the Home Location Register (HLR) is configured to associate the second Mobile Station International Subscriber Directory Number (MSISDN) with the secondary International Mobile Subscriber Identity (IMSI) of the remote device.

In a third embodiment, a communication device for a cellular network is provided. The communication devices comprises a measurement controller adapted to generate a measurement report relating to a physical parameter and a Subscriber Identity Module (SIM) storing a primary International Mobile Subscriber Identity (IMSI) corresponding to a first shared Mobile Station International Subscriber Directory Number (MSISDN), the communication device further comprising a call controller configured to initiate automatically a call based on the primary International Mobile Subscriber Identity (IMSI) in order to send the measurement report generated by the measurement controller, wherein the Subscriber Identity Module (SIM) is a multiple-identity Subscriber Identity Module and wherein the call controller is arranged for receiving a secondary International Mobile Subscriber Identity (IMSI) number corresponding to a second Mobile Station International Subscriber Directory Number (MSISDN) and an associated configuration instruction defining a time slot, for storing the secondary International Mobile Subscriber Identity (IMSI) number into the Subscriber Identity module (SIM) and for activating the secondary International Mobile Subscriber Identity (IMSI) during the associated time slot in order to allow incoming call towards the communication device based on the second Mobile Station International Subscriber Directory Number (MSISDN).

In some embodiments, the communication device comprises one or more of the features below:
- the measurement controller comprises a sensor or a meter, such as an electrical meter or a gas meter
- the communication device comprises a malfunction detection module adapted to detect a malfunction of the communication device and an incoming communication requesting module for requesting, in response to detection of a malfunction, an incoming call in order to receive a secondary International Mobile Subscriber Identity (IMSI) number corresponding to a second Mobile Station International Subscriber Directory Number (MSISDN) and an associated configuration instruction defining a time slot, the incoming communication requesting module being adapted to request an incoming communication call.

In a fourth embodiment, a cellular network comprising a plurality of communication devices according to the third above-mentioned embodiment sharing a first Mobile Station International Subscriber Directory Number (MSISDN) and a system according to the second above-mentioned embodiment for providing an incoming call, through the cellular network, to the communication devices is provided.

### Brief description of the drawings

These and other aspects of the invention will be apparent from and elucidated with reference to the embodiments described hereinafter, by way of example, with reference to the drawings.
**Figure 1** is a schematic diagram of a cellular network with plural remote communication devices sharing a first Mobile Station International Subscriber Directory Number (MSISDN) according to an embodiment.
**Figure 2** is a schematic diagram of a cellular network with plural remote communication devices sharing a primary International Mobile Subscriber Identity (IMSI) and a first Mobile Station International Subscriber Directory Number (MSISDN).
**Figure 3** is a time diagram illustrating the steps of a method for providing an incoming call to a communication device sharing a first MSISDN with other communication devices according to an embodiment.
**Figure 4** is a time diagram illustrating the steps of a method for providing an incoming call to a communication device sharing a first MSISDN with other communication devices according to another embodiment.

### Detailed description of the embodiments

According to an implementation of the present subject-matter, systems and methods for providing an incoming call to remote communication devices sharing a primary Mobile Station International Subscriber Directory Number (MSISDN) are described.

Though an embodiment will be described within the scope of a Global System for Mobile Communication (GSM) network utilizing the different GSM communication standards, such as 2G and 3G, it should be understood that the invention is equally applicable to other types of cellular communication networks.

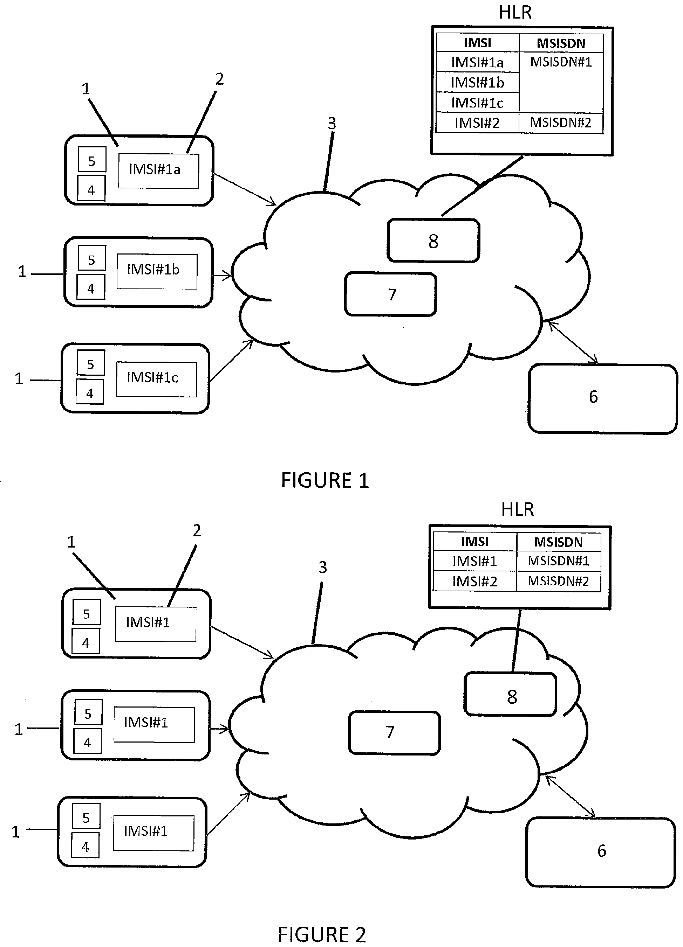

Plural communication devices 1 connected with a cellular network 3 are illustrated in Figures 1 and 2.

Each communication device 1 comprises a Subscriber Identity Module (SIM) card 2 which authorizes the communication device 1 to connect with the cellular network 3 based on an International Mobile Subscriber Identity (IMSI) number. Such a SIM card 2 is typically a Universal Integrated Circuit Card (UICC) that comprises a processor and a memory that securely stores at least a primary International Mobile Subscriber Identity (IMSI) and the related K authentication Key which allows authentication of the communication device 1 while establishing a connection with the cellular network 3.

The SIM card 2 is a multiple-identity SIM, also called multiple IMSIs SIM card, and is therefore adapted to store multiple subscriber identities and especially plural IMSIs.

A communication device 1 also comprises a call controller 4. The call controller 4 is arranged to initiate calls based on the primary IMSI stored into the SIM card 2. The call controller 4 is also arranged for receiving from the network 3 a secondary International Mobile Subscriber Identity (IMSI), an associated K authentication Key and a configuration instruction defining a time slot associated with the secondary IMSI and for storing the secondary IMSI into the SIM card 2.

Furthermore, when a secondary IMSI has been received, the call controller 4 is arranged to perform a registration based on the secondary IMSI with the network service provider and, therefore, causes the communication device 1 to activate the secondary IMSI during the time slot defined in the received configuration instruction.

Such a call controller 4 may be an application embedded in the SIM card 2 or implemented in other hardware of the communication device 1.

According to the illustrated embodiment, communication devices 1 are machine to machine communication devices. A machine to machine communication device 1 comprises a measurement controller 5 that captures and records data relating to one or several physical parameters, such as pressure, temperature, humidity, inventory level and/or others and generates measurement report based on the captured and recorded data. In order to transmit measurement report, the call controller 4 automatically initiates call through the cellular network 3 toward a machine to machine back-office system 6 which contains an application that manage the machine to machine communication devices 1 and the data handled by them.

In an embodiment, public or private utility organization, e.g. electricity, gas or water provider, implements the communication device 1 in a subscriber's residential meter for monitoring the consumption of electricity, gas or water.

Depending on the machine-to-machine application, the call Controller 4 can initiate a call periodically and/or when a specific event has been detected. For example, for machine to machine communication device 1 whose purpose is to check that a temperature threshold is not exceeded, the specific event which triggers a call initiating would be a temperature threshold overrun.

According to an embodiment, the communication devices 1 are capable of requesting an incoming call, especially while detecting a malfunction of communication devices 1. To that end, the communications devices may comprise a malfunction detection module, not shown, adapted to detect a malfunction of the communication device 1 and the call controller 4 may comprise an incoming communication requesting module. Such an incoming detection module is arranged to request an incoming call in response to detection of a malfunction.

The cellular network infrastructure is provided a Home Location Register 8 (HLR) in which subscriber identities, including IMSI and MSISDN of the communication devices 1 are stored. Such a Home Location register 8 allocates a MSISDN to each IMSI number.

In an embodiment illustrated in Figure 1, each of the communication devices 1 has its own IMSI: IMSI#1a, IMSI#1b, IMSI#1c. Therefore, the Home Location Register 8 (HLR) of the service provider network is arranged to associate a shared first Mobile Station International Subscriber Directory Number: MSISDN#1 with each different IMSI numbers: IMSI#1a, IMSI#1b, IMSI#1c of the communication devices 1.

According to another embodiment illustrated on Figure 2, plural communication devices 1 have the same primary IMSI: IMSI#1. Thus, the Home Location Register allocates the primary MSIDSN:MSISDN#1 to the said IMSI: IMSI#1. In that case, in order to identify each communication device 1, the cellular network 3 is adapted to use a discriminant. As an example, the discriminant can be a predefined period of time, different for each of the communication devices 1 sharing the primary IMSI, during which the communication device 1 automatically initiates a call, e.g. periodically.

The cellular network 3 comprises a system which allows providing an incoming call to a communication device 1. In the illustrated embodiment, the system comprises a communication server 7 arranged in a fixed infrastructure of the cellular network. Of course, the communication server 7 may be implemented in a number of ways. For example, the communication server 7 for providing an incoming call may also be implemented into the machine to machine back-office system 6.

The communication server 7 typically comprises a processor and a memory. Such a communication server 7 is configured to establish a communication channel with a communication device 1 when the communication device 1 initiates a call. Furthermore, the communication server 7 is also arranged to download through the established communication channel a secondary IMSI number to the communication device 1 together with an associated K authentication Key and an associated configuration instruction defining a time slot for which the secondary IMSI must be activated by the communication device 1. In an embodiment, the time slot may be defined by a beginning date and an ending date.

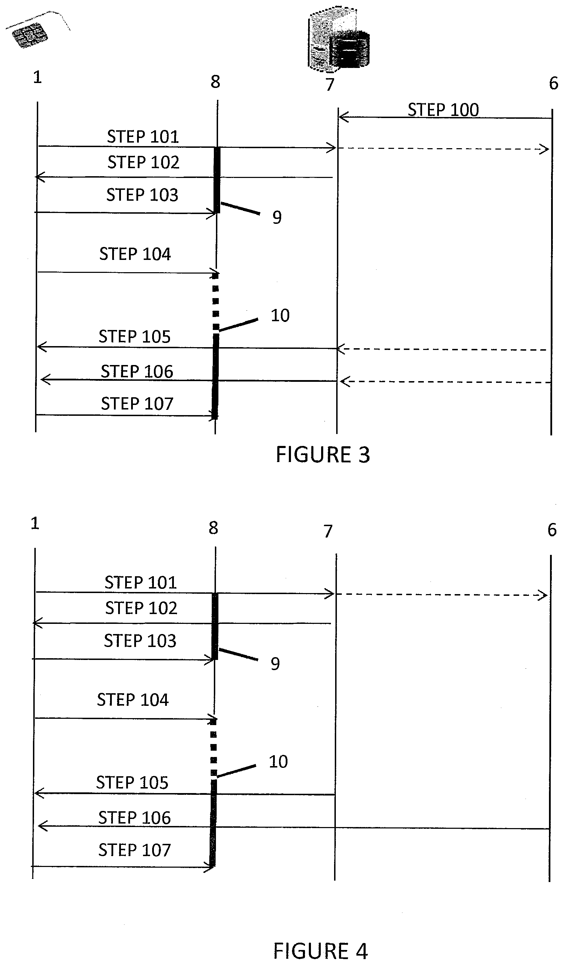

A method executed by the communication server 7 for providing an incoming call to a communication device 1, according to an embodiment, will now be described in detail in relation with Figure 3.

In a first step 100, the communication server 7 receives identification data identifying the communication device 1 for which an incoming call has to be provided. In an embodiment, such identification data are transmitted by the machine to machine back-office system 6.

By way of examples, a communication device 1 may be selected to be called by the communication server 7 because a software application or driver of the said communication device 1 has to be updated, a malfunction of this communication device 1 has been detected, for example by the machine to machine back-office system 6, and must be repaired and/or a preventive maintenance operation has to be carried out.

In a Step 101, while the communication device 1 automatically initiates a call based on the primary IMSI through the cellular network 3, for example to send a measurement report to the back-office system 6, the communication server 7 establishes a communication channel with the communication devices 1.

Then, the communication server 7 determines whether the communication device 1 which has initiated the call corresponds to the device 1 identified by the identification data received in Step 100. Typically, the identification data comprises the primary IMSI of the remote device and, optionally, a discriminant, such as the predefined period of time allocated to the communication device 1 for automatically initiating a call based on the primary IMSI, in the embodiment where several communication devices 1 share the same primary IMSI number.

If the communication server 7 detects that a communication is established with a communication device 1 corresponding to the identification data, the communication server 7 transmits, through the established communication channel, to the communication device 1, a secondary IMSI: IMSI#2, together with a configuration instruction defining an associated time slot and a related K authentication Key (Step102). The call controller 4 of the communication device 1 receives the secondary IMSI: IMSI#2, and stores it into the SIM card 2.

The secondary IMSI: IMSI#2 is a temporary IMSI corresponding to a second MSISDN: MSISDN #2. Upon the download from the communication server 7 to the communication device 1 being finished, the communication channel between the communication server 7 and the communication device 1 is ended and the communication device 1 informs the Home Location Register 8 that the primary IMSI is inactivated (Step 103). The bold line referenced 9 shows the period of time during which the primary IMSI is activated.

Then, as a function of the configuration instruction, the call controller 4 performs a registration based on the secondary IMSI: IMSI#2, with the Home Location Register 8 of the network 3 and causes the communication device 1 to activate the secondary IMSI during the associated time slot (Step 104). The secondary IMSI: IMSI#2, is thus activated during the time slot defined in the configuration instruction.

As a consequence, since the second MSISDN: MSISDN#2 is not shared between several communication devices 1, the Home Location Register 8 can assign an IMSI: IMSI#2 corresponding to the said second MSISDN: MSISDN #2, and an incoming call toward the communication device 1 based on the second MSISDN: MSISDN #2 corresponding to the secondary IMSI: IMSI#2 is now possible.

In a step 105, an incoming call based on the second MSISDN: MSISDN#2, is initiated by the back-office system 6 or by some other communication terminal, during the associated time slot, toward the communication device 1. Such incoming call may be used, for the purpose of maintenance, for example in order to update a software application or a driver and/or to diagnose or repair malfunction of the communication device 1.

According to an embodiment, at the end of the incoming call based on the second MSISDN: MSISDN#2, e.g. when a maintenance task has been performed, the communication device 1 receives a secondary IMSI disable instruction from the machine to machine back-office system 6 or from the communication server 7 (Step 106). In response to receiving the secondary IMSI disable instruction, the communication device informs the Home Location Register 8 that the secondary IMSI: IMSI#2 is inactivated and erases the secondary IMSI: IMSI#2 from its SIM card 2 (Step 107). The bold line referenced 10 shows the period of time during which the secondary IMSI: IMSI#2 is activated for the communication device 1.

Anyway, the communication devices 1 informs the Home Location Register 8 that the secondary IMSI is inactivated and erases the secondary IMSI from its SIM card 2 also in the case where the time slot has passed and no incoming call has been initiated during the time slot.

Later on, the temporary secondary IMSI: IMSI#2, can be downloaded to other communication devices. Hence, the secondary IMSI is a shared resource usable by several communication devices 1 in turn.

It should be noted that the following predefined period of time allocated to the communication device to initiate a call based on the primary IMSI may occur while the secondary IMSI is still activated. Likewise, a specific event that triggers a call initiating based on the primary IMSI may also occur while the secondary IMSI is still activated.

In such cases, according to an embodiment, the call controller 4 of the communication device 1 is configured to allow a call based on the primary IMSI and to inactivate the secondary IMSI during the call based on the primary IMSI. Hence, the call controller 4 yields priority to the communication based on the primary IMSI, e.g. periodical reports, over the communication based on the secondary IMSI.

According to another embodiment, the priority is inverted and the call controller 4 of the communication device 1 is configured to postpone, e.g. to the next predefined period of time, the call based on the primary IMSI as long as the secondary IMSI is activated. However, according to theses above-mentioned embodiments, the call controller 4 of the communication device 1 is preferably arranged to postpone a call initiating based on the primary IMSI as long as an incoming call toward the communication device 1 based on the second MSISDN is underway.

A method executed by the communication server 7 for providing an incoming call to a communication device 1, according to another embodiment, will now be described in relation with Figure 4.

In a step 101, the communication device 1 automatically initiates a call based on the primary IMSI, through the cellular network 3 and the communication server 7 established a communication channel with the said communication device.

Since the communication device 1 has detected a malfunction through its malfunction detection module, the communication device 1 requests an incoming call through its incoming communication requesting module.

In a step 102, in response to incoming call request, the communication server 7 transmits, through the established communication channel, to the communication device 1, a temporary secondary IMSI: IMSI#2 and configuration instruction defining a time slot and the communication device 1 stores the temporary secondary IMSI: IMSI#2 in its SIM card 2. In a step 103, the communication device 1 informs the Home Location Register 8 that the primary IMSI is inactivated.

Then, in a step 104, the communication device 1 activates the secondary IMSI: IMSI#2 and is now reachable, through the cellular network 3, based on the second MSISDN: MSISDN#2. In a step 105, a call towards the communication devices 1 requesting an incoming call is initiated by the communication server 7 based on the second MSISDN: MSISDN#2.

At the end of the incoming call based on the second MSISDN: MSISDN#2, the communication device 1 may also receive a secondary IMSI disable instruction (Step 106) which causes the communication device 1 to inform the Home Location Register 8 that the secondary IMSI is inactivated and to erase the secondary IMSI: IMSI#2 from its SIM card (Step 107).

In the embodiments illustrated in Figure 1 and Figure 2, the primary IMSIs, the corresponding first MSISDN, the secondary IMSI and the corresponding second MSISDN are stored in the same Home location Register 8. In that case, the communication server 7 and the Home Location Register 8 advantageously belong to the same service provider. However, the primary IMSIs and the corresponding first MSISDN, on one hand, and the secondary IMSI and the corresponding second MSISDN, on the other hand, may equally be stored into two different Home Location Registers 8, each belonging to two different service providers. In that case, the two service providers may have a mutual agreement such that the service provider which owns the Home Location Register 8 storing the secondary IMSI and the corresponding MSISDN share information relating to the availability of temporary secondary IMSIs and the corresponding MSISDNs with the other service provider which owns the communication server 7 and the Home Location Register 8 storing the primary IMSI(s) and the corresponding MSISDN.

The methods and systems described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. Method for providing an incoming call, through a cellular network (3), to a remote device (1) sharing a first Mobile Station International Subscriber Directory Number with other remote devices (1) and having a Subscriber Identity Module (2) storing a primary International Mobile Subscriber Identity corresponding to the first Mobile Station International Subscriber Directory Number, the method comprising:
- receiving a call from the remote device (1), the call being based on the primary International Mobile Subscriber Identity of the remote device;
- establishing a communication channel with the remote device (1) in response to receiving the call based on the primary International Mobile Subscriber Identity;
- the method being **characterized in that** it comprises :
- transmitting, through the established communication channel, to the Subscriber Identity Module (2) of the remote device (1) a secondary International Mobile Subscriber Identity corresponding to a second Mobile Station International Subscriber Directory Number with an associated configuration instruction defining a time slot to cause the remote device (1) to activate the secondary International Mobile Subscriber Identity during the associated time slot in order to allow incoming call based on the second Mobile Station International Subscriber Directory Number towards the remote device (1) during the associated time slot.

2. Method according to claim 1, comprising initiating an incoming call based on the second Mobile Station International Subscriber Directory Number towards the remote device (1) during the associated time slot.

3. Method according to claim 1 or 2, comprising receiving from the remote device (1) a request for an incoming call upon establishing the communication channel with the remote device (1).

4. Method according to claim 3, comprising receiving and storing identification data identifying a remote device (1) for which an incoming call is requested prior to receiving the call from the remote device (1), detecting a communication channel established with the remote device (1) based on the identification data and automatically transmitting to the Subscriber Identity Module (2) of the remote device (1), the secondary International Mobile Subscriber Identity through the established communication channel in response to the detection of communication channel.

5. System for providing an incoming call, through a cellular network (3), to a remote device sharing a first Mobile Station International Subscriber Directory Number with other remote devices (1) and having a Subscriber Identity Module (2) storing a primary International Mobile Subscriber Identity corresponding to the first Mobile Station International Subscriber Directory Number, the system comprising a processor and a memory and being configured to:
- receive a call from the remote device (1), the call being based on the primary International Mobile Subscriber Identity of the remote device (1);
- establish a communication channel with the remote device (1) upon the remote device (1) initiating a call based on the primary International Mobile Subscriber Identity; the system being **characterized in that** it is further configured to :
- transmit, through the established communication channel, to the Subscriber Identity Module of the remote device (1) a secondary International Mobile Subscriber Identity corresponding to a second Mobile Station International Subscriber Directory Number with an associated configuration instruction defining a time slot to cause the remote device (1) to activate the secondary International Mobile Subscriber Identity during the associated time slot in order to allow incoming call based on the second Mobile Station International Subscriber Directory Number towards the remote device (1) during the associated time slot.

6. System according to claim 5, wherein the processor is configured to initiate an incoming call based on the second Mobile Station International Subscriber Directory Number towards the remote device (1) during the associated time slot.

7. System according to claim 5 or 6, wherein the processor is further configured to receive and store identification data identifying a remote device (1) for which incoming call has to be provided, to detect a communication channel established with the remote device (1) for which incoming call has to be provided based on the identification data and to automatically transmit to the Subscriber Identity Module (2) of the remote device (1) the secondary International Mobile Subscriber Identity through the established communication channel in response to communication channel detection.

8. System according to any one of claims 5 to 7, comprising a Home Location Register (8) configured to associate the shared primary Mobile Station International Subscriber Directory Number with the primary International Mobile Subscriber Identity of the remote device (1).

9. System according to claim 8, wherein the remote devices sharing the same primary Mobile Station International Subscriber Directory Number have different primary International Mobile Subscriber Identities, the Home Location Register (8) being configured to associate a primary Mobile Station International Subscriber Directory Number with the different primary International Mobile Subscriber Identities.

10. System according to claim 8, wherein the remote devices (1) sharing the same primary Mobile Station International Subscriber Directory Number share a same primary International Mobile Subscriber Identity, and wherein the system is configured to identify each of the remote devices (1) based on a predefined period of time allocated to each remote device (1) to initiate a call based on the primary International Mobile Subscriber Identity.

11. System according to any one of claims 8 to 10, wherein the Home Location Register (8) is configured to associate the second Mobile Station International Subscriber Directory Number with the secondary International Mobile Subscriber Identity of the remote device (1).

12. A communication device (1) for a cellular network (3), the communication device comprising a measurement controller (5) adapted to generate a measurement report relating to a physical parameter and a Subscriber Identity Module (2) storing a primary International Mobile Subscriber Identity corresponding to a first shared Mobile Station International Subscriber Directory Number, the communication device further comprising a call controller (4) configured to initiate automatically a call based on the primary International Mobile Subscriber Identity in order to send the measurement report generated by the measurement controller (5), wherein the Subscriber Identity Module is a multiple-identity Subscriber Identity Module, the communication device being **characterized in that** the call controller is arranged for receiving a secondary International Mobile Subscriber Identity number corresponding to a second Mobile Station International Subscriber Directory Number and an associated configuration instruction defining a time slot, for storing the secondary International Mobile Subscriber Identity number into the Subscriber Identity module and for activating the secondary International Mobile Subscriber Identity during the associated time slot in order to allow incoming call towards the communication device based on the second Mobile Station International Subscriber Directory Number.

13. A communication device (1) according to claim 12, wherein the measurement controller (5) comprises a sensor or a meter.

14. A communication device (1) according to claim 13, comprising a malfunction detection module adapted to detect a malfunction of the communication device (1) and an incoming communication requesting module for requesting, in response to detection of a malfunction, an incoming call in order to receive a secondary International Mobile Subscriber Identity number corresponding to a second Mobile Station International Subscriber Directory Number and an associated configuration instruction defining a time slot, the incoming communication requesting module being adapted to request an incoming communication call.

15. A cellular network comprising a plurality of communication devices (1) according to any one of claims 12 to 14 sharing a first Mobile Station International Subscriber Directory Number and a system according to any one of claims 5 to 11, for providing an incoming call, through the cellular network (3), to the communication devices (1).

## Patentansprüche

1. Methode zur Übertragung eines über ein Mobilfunknetz (3) eingehenden Anrufs an eine Fernwirkeinrichtung (1), die sich mit anderen Fernwirkeinrichtungen (1) eine erste Mobile Station International Subscriber Directory Number (MSISDN) teilt und über ein Teilnehmer-Identitätsmodul (SIM-Karte) (2) verfügt, worauf eine primäre Internationale Mobilfunk-Teilnehmerkennung (IMSI) entsprechend der ersten Mobile Station International Subscriber Directory Number befindet und die Methode besteht aus:
- Empfang eines Anrufs von der Fernwirkeinrichtung (1), der auf der primären Internationalen Mobilfunk-Teilnehmerkennung der Fernwirkeinrichtung basiert;
- Aufbau eines Kommunikationskanals mit der Fernwirkeinrichtung (1) als Reaktion auf den Empfang des Anrufs basierend auf der primären Internationale Mobilfunk-Teilnehmerkennung;
- die Methode ist **dadurch gekennzeichnet, dass** sie besteht aus:
- der Übertragung, über den aufgebauten Kommunikationskanal, an das Teilnehmer-Identitätsmodul (2) der Fernwirkeinrichtung (1) einer sekundären Internationale Mobilfunk-Teilnehmerkennung, die einer zweiten Mobile Station International Subscriber Directory Number mit zugehörigen Konfigurationsanleitungen entspricht, und ein Zeitfenster definiert, das die Fernwirkeinrichtung (1) während des zugehörigen Zeitfensters zur Aktivierung der sekundären Internationalen Mobilfunk-Teilnehmerkennung veranlasst, eingehende Anrufe basierend auf der zweiten Internationale Mobilfunk-Teilnehmerkennung während des zugehörigen Zeitfensters bei der Fernwirkeinrichtung (1) zulassen.

2. Methode gemäß Patentanspruch 1, bestehend aus dem Auslösen eines eingehenden Anrufs basierend auf der zweiten Mobile Station International Subscriber Directory Number während des zugehörigen Zeitfensters zu der Fernwirkeinrichtung (1).

3. Methode gemäß Patentanspruch 1 oder 2, bestehend aus dem Empfang einer Anfrage für einen eingehenden Anruf von der Fernwirkeihrichtung (1) nach dem Aufbau des Kommunikationskanals mit der Fernwirkeinrichtung (1).

4. Methode gemäß Patentanspruch 3, bestehend aus dem Empfang und der Speicherung von Indentifikationsdaten, die eine Fernwirkeinrichtung (1) identifizieren, für die ein eingehender Anruf vor dem Empfang des Anrufs von der Fernwirkeinrichtung (1) angefragt wurde, Erkennen eines mit der Fernwirkeinrichtung (1) aufgebauten Kommunikationskanals basierend auf den Indentifikationsdaten und der automatischen Übertragung an das Teilnehmer-Identitätsmodul (2) der Fernwirkeinrichtung (1), die sekundäre Internationale Mobilfunk-Teilnehmerkennung über den aufgebauten Kommunikationskanal als Reaktion auf die Erkennung des Kommunikationskanals.

5. System zur Übertragung eines eingehenden Aufrufs über ein Mobilfunknetz (3) an eine Fernwirkeinrichtung, die eine erste Mobile Station International Subscriber Directory Number mit anderen Fernwirkeinrichtungen (1) teilt und mit einem Teilnehmer-Identitätsmodul (2) zur Speicherung einer primären Internationalen Mobilfunk-Teilnehmerkennung entsprechend der ersten Mobile Station International Subscriber Directory Number ausgestattet ist und das System aus einem Prozessor und einem Speicher besteht und wie folgt konfiguriert ist:
- Empfang eines Anrufs von einer Fernwirkeinrichtung (1), der auf der primären Internationalen Mobilfunk-Teilnehmerkennung der Fernwirkeinrichtung (1) basiert;
- Aufbau eines Kommunikationskanals mit der Fernwirkeinrichtung (1) nach Auslösung eines Anrufs basierend auf der primären Internationalen Mobilfunk-Teilnehmerkennung der Fernwirkeinrichtung und das System **dadurch gekennzeichnet, dass** es weiterhin konfiguriert ist zur:
- Übertragung, über den aufgebauten Kommunikationskanal, an das Teilnehmer-Identitätsmodul der Fernwirkeinrichtung (1) einer sekundären Internationalen Mobilfunk-Teilnehmerkennung, die einer zweiten Mobile Station International Subscriber Directory Number mit zugehörigen Konfigurationsanleitungen entspricht, und ein Zeitfenster definiert, das die Fernwirkeinrichtung (1) während des zugehörigen Zeitfensters zur Aktivierung der sekundären Internationalen Mobilfunk-Teilnehmerkennung veranlasst, eingehende Anrufe basierend auf der zweiten Mobile Station International Subscriber Directory Number während des zugehörigen Zeitfensters bei der Fernwirkeinrichtung (1) zuzulassen.

6. System gemäß Patentanspruch 5, in welchem der Prozessor zur Auslösung eines eingehenden Anrufs basierend auf der zweiten Mobile Station International Subscriber Directory Number bei der Fernwerkeinrichtung (1) während des zugehörigen Zeitfensters konfiguriert ist.

7. System gemäß Patentanspruch 5 oder 6, in welchem der Prozessor darüber hinaus zum Empfang und zur Speicherung von Indentifikationsdaten, die eine Fernwirkeinrichtung (1) identifizieren, konfiguriert ist, für die ein eingehender Anruf zu übertragen ist, um einen Kommunikationskanal, der mit der Fernwirkeinrichtung (1), für die ein eingehender Anruf basierend auf den Identifikationsdaten und der automatischen Übertragung an das Teilnehmer-Identitätsmodul (2) der Fernwirkeinrichtung (1), die sekundäre Internationale Mobilfunk-Teilnehmerkennung über den aufgebauten Kommunikationskanal als Reaktion auf die Erkennung des Kommunikationskanals aufzubauen.

8. System gemäß einem der Patentansprüche 5 bis 7, bestehend aus einem Heimat-Ortsregister (8), das zur Zuordnung der geteilten primären Internationalen Mobilfunk-Teilnehmerkennung mit der primären Internationalen Mobilfunk-Teilnehmerkennung der Fernwirkeinrichtung (1) konfiguriert ist.

9. System gemäß Patentanspruch 8, in dem die Fernwirkeinrichtungen, welche die gleiche primäre Internationale Mobilfunk-Teilnehmerkennung teilen, unterschiedliche primäre Internationale Mobilfunk-Teilnehmerkennungen haben, deren Heimat-Ortsregister (8) zur Zuordnung einer primären Internationale Mobilfunk-Teilnehmerkennung mit den unterschiedlichen primären Internationalen Mobilfunk-Teilnehmerkennungen konfiguriert sind.

10. System gemäß Patentanspruch 8, in dem die Fernwirkeinrichtungen (1), welche die gleiche primäre Mobile Station International Subscriber Directory Number teilen, eine gleiche primäre Internationale Mobilfunk-Teilnehmerkennung teilen, und in dem das System zur Identifizierung der Fernwirkeinrichtungen (1) basierend auf einem vordefinierten Zeitraum konfiguriert ist, der jeder Fernwirkeinrichtung (1) zugeordnet ist, um einen Anruf basierend auf der primären Internationalen Mobilfunk-Teilnehmerkennung auszulösen.

11. System gemäß einem der Patentansprüche 8 bis 10, in dem das Heimat-Ortsregister (8) zur Zuordnung der zweiten Mobile Station International Subscriber Directory Number mit der sekundären Internationalen Mobilfunk-Teilnehmerkennung der Fernwirkeinrichtung (1) konfiguriert ist.

12. Ein Kommunikationsgerät (1) für ein Mobilfunknetz (3), bei dem das Kommunikationsgerät aus einem zur Erzeugung eines Messberichts in Bezug auf einen physikalischen Parameter und ein Teilnehmer-Identitätsmodul (2) angepassten Messwert-Controller (5) besteht, der eine primäre Internationale Mobilfunk-Teilnehmerkennung entsprechend der ersten geteilten Mobile Station International Subscriber Directory Number speichert, und das Kommunikationsgerät darüber hinaus aus einem Anruf-Controller (4) besteht, der zur automatischen Auslösung eines Anrufs basierend auf der primären Internationalen Mobilfunk-Teilnehmerkennung konfiguriert ist, um den durch den Messwert-Controller (5) erzeugten Messbericht zu senden, wobei das Teilnehmer-Identitätsmodul ein Teilnehmer-Identitätsmodul für mehrere Identitäten ist, das Kommunikationsgerät **dadurch gekennzeichnet ist, dass** der Anruf-Controller so ausgelegt ist, um eine sekundäre Internationale Mobilfunk-Teilnehmerkennung entsprechend der zweiten Mobile Station International Subscriber Directory Number sowie eine zugehörige Konfigurationsanleitung zu erhalten, die ein Zeitfenster zur Speicherung der sekundären Internationalen Mobilfunk-Teilnehmerkennung im Teilnehmer-Identitätsmodul und zur Aktivierung der sekundären Internationalen Mobilfunk-Teilnehmerkennung während des zugeordneten Zeitfensters zu definieren, um eingehende Anrufe basierend auf der zweiten Mobile Station International Subscriber Directory Number beim Kommunikationsgerät zuzulassen.

13. Ein Kommunikationsgerät (1) gemäß Patentanspruch 12, in dem der Messwert-Controller (5) aus einem Sensor oder Messgerät besteht.

14. Ein Kommunikationsgerät (1) gemäß Patentanspruch 13, bestehend aus einem Fehlererkennungsmodul, das zur Erkennung einer Fehlfunktion des Kommunikationsgeräts (1) angepasst ist und einem Anfragemodul für eingehende Kommunikation zur Anfrage, als Reaktion auf die Erkennung einer Fehlfunktion, eines eingehenden Anrufs, um eine sekundäre Internationale Mobilfunk-Teilnehmerkennung entsprechend der zweiten Mobile Station International Subscriber Directory Number und einer zugehörigen Konfigurationsanleitung zur Definition eines Zeitfensters zu empfangen, wobei das Anfragemodul für eingehende Kommunikation zur Anfrage eines eingehenden Kommunikationsanrufs angepasst ist.

15. Ein Mobilfunknetz, bestehend aus einer Vielzahl von Kommunikationsgeräten (1) gemäß einem der Patentansprüche 12 bis 14, die eine erste Mobile Station International Subscriber Directory Number sowie ein System gemäß einem der Patentansprüche 5 bis 11 zur Übertragung eines über ein Mobilfunknetz (3) eingehenden Anrufs an die Kommunikationsgeräte (1) teilen.

## Revendications

1. Procédé destiné à fournir un appel entrant, via un réseau cellulaire (3), à un dispositif distant (1) partageant un premier numéro d'appel international d'abonné mobile (MSISDN) avec d'autres dispositifs distants (1) et disposant d'un module d'identité d'abonné (SIM) (2) stockant une identité internationale d'abonné mobile (IMSI) primaire correspondant au premier numéro d'appel international d'abonné mobile (MSISDN), le procédé comprenant les étapes suivantes :
- recevoir un appel en provenance du dispositif distant (1), l'appel étant basé sur l'identité internationale d'abonné mobile (IMSI) primaire du dispositif distant ;
- établir un canal de communication avec le dispositif distant (1) en réponse à la réception de l'appel basé sur l'identité internationale d'abonné mobile primaire (IMSI) ; le procédé étant **caractérisé en ce qu'**il comprend l'étape suivante :
- transmettre, via le canal de communication établi, au module d'identité d'abonné (SIM) (2) du dispositif distant (1) une identité internationale d'abonné mobile (IMSI) secondaire correspondant à un deuxième numéro d'appel international d'abonné mobile (MSISDN) avec une instruction de configuration associée définissant un intervalle de temps pour commander au dispositif distant (1) d'activer l'identité internationale d'abonné mobile (IMSI) secondaire durant l'intervalle de temps associé afin de permettre l'établissement d'un appel entrant basé sur le deuxième numéro d'appel international d'abonné mobile (MSISDN) vers le dispositif distant (1) durant l'intervalle de temps associé.

2. Procédé selon la revendication 1, comprenant le déclenchement d'un appel entrant basé sur le deuxième numéro d'appel international d'abonné mobile (MSISDN) vers le dispositif distant (1) durant l'intervalle de temps associé.

3. Procédé selon la revendication 1 ou 2, comprenant la réception en provenance du dispositif distant (1) d'une demande pour un appel entrant dès l'établissement du canal de communication avec le dispositif distant (1).

4. Procédé selon la revendication 3, comprenant la réception et le stockage de données d'identification identifiant un dispositif distant (1) pour lequel un appel entrant est demandé avant la réception de l'appel en provenance du dispositif distant (1), la détection d'un canal de communication établi avec le dispositif distant (1) sur la base des données d'identification et la transmission automatique au module d'identité d'abonné (SIM) (2) du dispositif distant (1), de l'identité internationale d'abonné mobile (IMSI) secondaire via le canai de communication établi en réponse à la détection du canal de communication.

5. Système destiné à fournir un appel entrant, via un réseau cellulaire (3), à un dispositif distant partageant un premier numéro d'appel international d'abonné mobile (MSISDN) avec d'autres dispositifs distants (1) et disposant d'un module d'identité d'abonné (SIM) (2) stockant une identité internationale d'abonné mobile (IMSI) primaire correspondant au premier numéro d'appel international d'abonné mobile (MSISDN), le système comprenant un processeur et une mémoire et étant configuré pour :
- recevoir un appel en provenance du dispositif distant (1), l'appel étant basé sur l'identité internationale d'abonné mobile (IMSI) primaire du dispositif distant (1);
- établir un canal de communication avec le dispositif distant (1) dès que le dispositif distant (1) déclenche un appel basé sur l'identité internationale d'abonné mobile (IMSI) primaire ; le système étant **caractérisé en ce qu'**il est en outre configuré pour :
- transmettre, via le canal de communication établi, au module d'identité d'abonné (SIM) du dispositif distant (1) une identité internationale d'abonné mobile (IMSI) secondaire correspondant à un deuxième numéro d'appel international d'abonné mobile (MSISDN) avec une instruction de configuration associée définissant un intervalle de temps pour commander au dispositif distant (1) d'activer l'identité internationale d'abonné mobile (IMSI) secondaire durant l'intervalle de temps associé afin de permettre l'établissement d'un appel entrant basé sur le deuxième numéro d'appel international d'abonné mobile (MSISDN) vers le dispositif distant (1) durant l'intervalle de temps associé.

6. Système selon la revendication 5, dans lequel le processeur est configuré pour déclencher un appel entrant basé sur le deuxième numéro d'appel international d'abonné mobile (MSISDN) vers le dispositif distant (1) durant l'intervalle de temps associé.

7. Système selon la revendication 5 ou 6, dans lequel le processeur est en outre configuré pour recevoir et stocker des données d'identification identifiant un dispositif distant (1) pour lequel l'appel entrant doit être fourni, pour détecter un canal de communication établi avec le dispositif distant (1) pour lequel un appel entrant doit être fourni sur la base des données d'identification et pour transmettre automatiquement au module d'identité d'abonné (SIM) (2) du dispositif distant (1) l'identité internationale d'abonné mobile (IMSI) secondaire via le canal de communication établi en réponse à la détection du canal de communication.

8. Système selon l'une quelconque des revendications 5 à 7, comprenant un enregistreur de localisation nominal (HLR) (8) configuré pour associer le numéro d'appel international d'abonné mobile (MSISDN) primaire partagé à l'identité internationale d'abonné mobile (IMSI) primaire du dispositif distant (1).

9. Système selon la revendication 8, dans lequel les dispositifs distants partageant le même numéro d'appel international d'abonné mobile (MSISDN) primaire ont des identités internationales d'abonné mobile (IMSI) primaires différentes, l'enregistreur de localisation nominal (HLR) (8) étant configuré pour associer un numéro d'appel international d'abonné mobile (MSISDN) primaire aux différentes identités internationales d'abonné mobile (IMSI) primaires.

10. Système selon la revendication 8, dans lequel les dispositifs distants (1) partageant le même numéro d'appel international d'abonné mobile (MSISDN) primaire partagent une même identité internationale d'abonné mobile (IMSI) primaire, et dans lequel le système est configuré pour identifier chacun des dispositifs distants (1) sur la base d'un laps de temps prédéfini alloué à chaque dispositif distant (1) pour déclencher un appel basé sur l'identité internationale d'abonné mobile (IMSI) primaire.

11. Système selon l'une quelconque des revendications 8 à 10, dans lequel l'enregistreur de localisation nominal (HLR) (8) est configuré pour associer le deuxième numéro d'appel international d'abonné mobile (MSISDN) à l'identité internationale d'abonné mobile (IMSI) secondaire du dispositif distant (1).

12. Dispositif de communication (1) destiné à un réseau cellulaire (3), le dispositif de communication comprenant un contrôleur de mesure (5) adapté pour générer un rapport de mesure concernant un paramètre physique et un module d'identité d'abonné (SIM) (2) stockant une identité internationale d'abonné mobile (IMSI) primaire correspondant à un premier numéro d'appel international d'abonné mobile (MSISDN) partagé, le dispositif de communication comprenant en outre un contrôleur d'appel (4) configuré pour déclencher automatiquement un appel basé sur l'identité internationale d'abonné mobile (IMSI) primaire afin d'envoyer le rapport de mesure généré par le contrôleur de mesure (5), dans lequel le module d'identité d'abonné (SIM) est un module d'identité d'abonné à identités multiples, le dispositif de communication étant **caractérisé en ce que** le contrôleur d'appel est conçu pour recevoir un numéro d'identité internationale d'abonné mobile (IMSI) secondaire correspondant à un deuxième numéro d'appel international d'abonné mobile (MSISDN) et une instruction de configuration associée définissant un intervalle de temps, pour stocker le numéro d'identité internationale d'abonné mobile (IMSI) secondaire dans le module d'identité d'abonné (SIM) et pour activer l'identité internationale d'abonné mobile (IMSI) secondaire durant l'intervalle de temps associé afin de permettre l'établissement d'un appel entrant vers le dispositif de communication basé sur le deuxième numéro d'appel international d'abonné mobile (MSISDN).

13. Dispositif de communication (1) selon la revendication 12, dans lequel le contrôleur de mesure (5) comprend un détecteur ou un compteur.

14. Dispositif de communication (1) selon la revendication 13, comprenant un module de détection de défaut de fonctionnement adapté pour détecter un défaut de fonctionnement du dispositif de communication (1) et un module de demande de communication entrante pour demander, en réponse à la détection d'un défaut de fonctionnement, l'établissement d'un appel entrant afin de recevoir un numéro d'identité internationale d'abonné mobile (IMSI) secondaire correspondant à un deuxième numéro d'appel international d'abonné mobile (MSISDN) et une instruction de configuration associée définissant un intervalle de temps, le module de demande de communication entrante étant adapté pour demander l'établissement d'un appel de communication entrante.

15. Réseau cellulaire comprenant une pluralité de dispositifs de communication (1) selon l'une quelconque des revendications 12 à 14 partageant un premier numéro d'appel international d'abonné mobile (MSISDN) et un système selon l'une quelconque des revendications 5 à 11, destiné à fournir un appel entrant, via le réseau cellulaire (3), aux dispositifs de communication (1).
